(19) Europäisches Patentamt
European Patent Office
Office européen des brevets

(11) Veröffentlichungsnummer: **0 258 728**
**A2**

# (12) EUROPÄISCHE PATENTANMELDUNG

(21) Anmeldenummer: **87111923.6**

(22) Anmeldetag: **18.08.87**

(51) Int. Cl.4: **C08L 83/10**, C08K 5/51, //(C08L83/10,35:06,27:18,51:04)

(30) Priorität: **30.08.86 DE 3629546**

(43) Veröffentlichungstag der Anmeldung: **09.03.88 Patentblatt 88/10**

(84) Benannte Vertragsstaaten: **DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Kress, Hans-Jürgen, Dr., Mobay Corporation**
**Plastics and Rubber Division Mobay Road**
**Pittsburgh, PA 15205(US)**
Erfinder: **Lindner, Christian, Dr.**
**Riehlerstrasse 200**
**D-5000 Köln 60(DE)**
Erfinder: **Müller, Friedemann, Dr.**
**Am Steinacker 5**
**D-4040 Neuss 21(DE)**
Erfinder: **Peters, Horst, Dr.**
**Winterberg 25**
**D-5090 Leverkusen 3(DE)**
Erfinder: **Wittmann, Dieter, Dr.**
**Doerperhofstrasse 15**
**D-4150 Krefeld(DE)**
Erfinder: **Buekers, Josef**
**Kneinstrasse 58a**
**D-4150 Krefeld(DE)**

## (54) Schlagzähe, flammwidrige Formmassen.

(57) Gegenstand der vorliegenden Erfindung sind thermoplastische Formmassen enthaltend Polydiorganosiloxan-Polycarbonat-Blockcopolymere, thermoplastische Copolymerisate, halogenfreie Phosphorverbindungen, Tetrafluorethylenpolymerisate und geringe Mengen an Pfropfpolymerisaten sowie gegebenenfalls wirksame Mengen an Stabilisatoren, Pigmenten, Fließmitteln, Entformungsmitteln und/oder Antistatika, sowie Verfahren zu ihrer Herstellung.

EP 0 258 728 A2

## Schlagzähe, flammwidrige Formmassen

Gegenstand der vorliegenden Erfindung sind thermoplastische Formmassen, enthaltend

A) 60 bis 90 Gew.-Teile eines halogenfreien Polydiorganosiloxan-Polycarbonat-Blockcopolymeren mit mittlerem Molekulargewicht $\bar{M}_w$ von 10 000 bis 200 000 und mit einem Gehalt an aromatischen Carbonatstruktureinheiten zwischen 75 und 99 Gew.-%, vorzugsweise zwischen 75 und 97,5 Gew.-%, und einem Gehalt an Diorganosiloxan-Einheiten zwischen 25 und 1,0 Gew.-%, vorzugsweise zwischen 25 und 2,5 Gew.-%, wobei die Blockcopolymeren, ausgehend von α,ω-Bishydroxyaryloxyendruppen-haltigen Polydiorganosiloxanen, mit einem Polymerisationsgrad $\bar{P}_n$ von 5 bis 100, vorzugsweise von 20 bis 80, hergestellt werden,

B) 10 bis 40 Gew.-Teile eines halogenfreien thermoplastischen Copolymerisats aus 50 bis 95 Gew.-% Styrol, α-Methylstyrol, kernsubstituiertem Styrol oder Mischungen daraus und 5 bis 50 Gew.-% (Meth)-Acrylnitril

C) 1 bis 20 Gew.-Teile, vorzugsweise 2 bis 15 Gew.-Teile, bezogen auf 100 Gew.-Teile Gesamtgewicht aus A) und B), einer halogenfreien Phosphorverbindung der Formel (I);

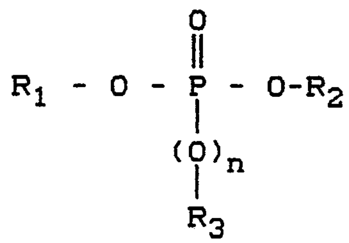

(I)

worin

$R_1$, $R_2$ und $R_3$ unabhängig voneinander $C_1$-$C_8$-Alkyl oder gegebenenfalls alkylsubstituiertes $C_6$-$C_{20}$-Aryl sind und

"n" für 0 oder 1 steht und

D) 0,05 bis 5 Gew.-Teile, insbesondere 0,1 bis 1,0 Gew.-Teile, bezogen auf 100 Gew.-Teile Gesamtgewicht aus A) und B) eines Tetrafluorethylenpolymerisats mit mittlerer Teilchengröße von 0,05 bis 20 µm und einer Dichte von 1,2 bis 1,9 g/cm³, wobei die Komponente D) in Form einer koagulierten Mischung von Emulsionen der Tetrafluorethylenpoly merisate D) mit Emulsionen von max. 3 Gew.-Teilen, mindestens jedoch 0,1 Gew.-Teil, bezogen auf 100 Gew.-Teile der Summe der Komponenten A) und B), von Pfropfpolymerisaten

E) aus 5 bis 90 Gew.-Teilen, vorzugsweise 30 bis 80 Gew.-Teilen, einer Mischung aus

E.1.1 50 bis 95 Gew.-% Styrol, α-Methylstyrol, kernsubstituiertem Styrol, Methylmethacrylat oder Mischungen daraus und

E.1.2 50 bis 5 Gew.-% (Meth)-Acrylnitril, Methylmethacrylat, Maleinsäureanhydrid, N-substituiertem Maleinimid oder Mischungen daraus, auf

E.2 95 bis 10 Gew.-Teile vorzugsweise 70 bis 20 Gew.-Teile eines Kautschuks mit einer Glastemperatur $T_G \leq 10°C$, eingesetzt wird, und wobei das Gewichtsverhältnis Propfpolymerisat E) zum Tetrafluorethylenpolymerisat D) zwischen 95:5 und 60:40 liegt,

sowie gegebenenfalls wirksamen Mengen an Stabilisatoren, Pigmenten, Fließmitteln, Entformungsmitteln und/oder Antistatika.

Die Komponente A) kann auch eine Mischung aus halogenfreien Polydiorganosiloxan-Polycarbonat-Blockcopolymeren mit anderen siloxanfreien, thermoplastischen, halogenfreien Polycarbonaten sein, wobei der Gesamtgehalt an Diorganosiloxy-Einheiten in dieser Mischung wiederum zwischen 1 und 25 Gew. -%, vorzugsweise zwischen 2,5 und 25 Gew.-%, liegt.

Gemäß der DE-OS 228 072 werden thermoplastische Polycarbonate mit einem Gemisch aus Hexabrombenzol und einer Antimonverbindung flammwidrig eingestellt, welche zusätzlich einen Phosphatester als Synergisten enthalten können. Der alleinige Zusatz von 10 Gew.-Teilen Triphenylphosphat zu Bisphenol A-Polycarbonat hat allerdings keine Antitropfwirkung gemäß Entflammungstest U.L. Subj. 94 (s. S. 20 der DE-OS 2 228 072).

GB-PS 1 459 648 beschreibt flammwidrige, nicht tropfende Polymere, z.B. aus ABS-Polymeren oder aus Polycarbonaten, denen ein Flammschutzadditiv, wie z.B. Triphenylphosphat, ein nicht brennbares Fasermaterial und Polytetrafluorethylenharz zugemischt worden sind. Das Beispiel 2 der GB-PS 1 459 648 zeigt, daß Polytetrafluorethylenharz ohne Faserzusatz nicht das Tropfen verhindert.

Aus der DE-OS 2 434 085 sind verschäumbare thermoplastische Kunststoffe bekannt, wobei als Thermoplasten u.a. Polycarbonate, Polymerisate oder Mischungen davon genannt sind. Als Polymerisate sind auch solche aus Butadien, Styrol und Acrylnitril oder aus Styrol allein ge nannt. Als Flammschutzmittel können die verschäumbaren Kunststoffe Phosphatester enthalten, gegebenenfalls in Kombination mit Halogenverbindungen. Als Halogenverbindungen sind keine Polytetrafluorethylenpolymerisate empfohlen.

Gemäß DE-OS 2 921 325 ist der Zusatz von Pentaerythritdiphosphaten und -diphosphonaten als Flammschutzmittel für Polycarbonate beschrieben, wobei zusätzlich Halogenverbindungen mitverwendet werden können, die gemäß der auf S. 9 der DE-OS 2 921 325 zitierten US-Patentschrift 3 392 136 auch Polyvinylidenfluoride sein können. Den Polycarbonaten können ABS-Copolymerisate zugemischt sein.

Aus US-PS 4 355 126 und 4 107 232 sind u.a. flammwidrige ABS-Polymerisate bekannt, die Polytetrafluorethylene enthalten. Als Flammschutzmittel ist Triphenylphosphat besonders bevorzugt.

Aus den DE-OS 2 903 100 und 2 918 883 sind flammwidrige Mischungen aus Polycarbonaten, ABS-Polymerisaten und Halogenverbindungen bekannt. Gemäß DE-OS 2 903 100 wird die Flammwidrigkeit durch spezielle organische Sulfonate erreicht. Fluorierte Polyolefine können als tropfhemmende Mittel zugesetzt werden. Gemäß DE-OS 2 918 883 wird die Flammwidrigkeit durch Alkali-oder Erdalkalisalze von Säuren in Kombination mit Antitropfmitteln erreicht, wobei die ABS-Polymerisate nur max. 10 Gew.-%, bezogen auf Gesamtmischung, betragen.

Bekannt sind auch flammwidrige Polymermischungen, die neben Polytetrafluorethylenen und organischen Halogenverbindungen Polyphosphate mit Molekulargewichten $\bar{M}_w$ von 1 600 bis 150 000 in Mengen von 1 bis 35 Gew.-% enthalten (EP-A 0 103 230). Die Polycarbonate dieser Formmassen sind jedoch überwiegend aus tetramethylierten Diphenolen aufgebaut.

Aus der DE-OS 3 322 260 sind flammwidrige thermoplastische Formmassen bekannt, die

a. aromatische Polycarbonate,
b. SAN-Pfropfpolymerisate,
c. thermoplastische Polymerisate,
d. gegebenenfalls Halogenverbindungen,
e. Antimontrioxid, Antimoncarbonat, Wismuttrioxid oder Wismutcarbonat und
f. feinteiliges Tetrafluorethylenpolymerisat enthalten, wobei dieses über eine wäßrige Emulsion des SAN-Pfropfpolymerisats b. und gegebenenfalls eine wäßrige Emulsion des thermoplastischen Polymerisats c. in die Formmasse eingebracht wird, wodurch gute Oberflächen der Formmassen erzielt werden.

Gemäß S. 16 dieser DE-OS läßt sich dieses Prinzip der Einarbeitung von Tetrafluorethylenpolymerisaten auf alle polycarbonathaltigen Formmassen übertragen.

Bezüglich der schwierigen Verarbeitung von Polytetrafluorethylenen sei noch auf FR-PS 1 412 767 verwiesen, bezüglich der Einarbeitung von Polytetrafluorethylenen in Thermoplaste, wie aromatische Polycarbonate oder Polymerisate von ungesättigten Monomeren, sei noch auf US-PS 3 294 871 hingewiesen sowie auf US-PS 3 005 795, insbesondere Spalten 3/4, wo Fällung und Koagulation erwähnt sind.

Gemäß der deutschen Patentanmeldung P 35 23 314.1 (Le A 23 940) sind schlagzähe, flammwidrige thermoplastische Formmassen auf Basis von siloxanfreien Polycarbonaten, Copolymerisaten von gegebenenfalls substituiertem Styrol und (Meth)Acrylnitril, halogenfreien Phosphorverbindungen und einem Polytetrafluorethylen, das eine Dichte von 1,2 bis 1,9 g/cm³ und eine Teilchengröße von 0,05 bis 20 µm besitzt, bekannt, wobei die Tetrafluorethylenpolymerisate in Form einer koagulierten Mischung von ihren Emulsionen mit Emulsionen von Pfropfpolymerisaten eingesetzt werden.

In Weiterentwicklung dieser Formmassen konnte nun gefunden werden, daß diese Formmassen bezüglich ihrer Zähigkeit, insbesondere der Kerbschlagzähigkeit, noch verbessert werden können, wenn die Polycarbonatkomponente A) aus Polydiorganosiloxan-Polycarbonat-Blockcopolymeren besteht oder diese enthält.

Die erfindungsgemäßen Formmassen zeichnen sich durch gute Kerbschlagzähigkeit, Oberflächenbeschaffenheit und hohe Flammwidrigkeit aus, ohne die in der üblichen Brandschutztechnologie verwendeten Halogen-und Metallverbindungen zu beinhalten.

Erfindungsgemäß geeignete halogenfreie Polydiorganosiloxan-Polycarbonat-Blockcopolymere gemäß Komponente A) sind solche auf Basis der halogenfreien Diphenole der Formel (II) und der Formel (IIa)

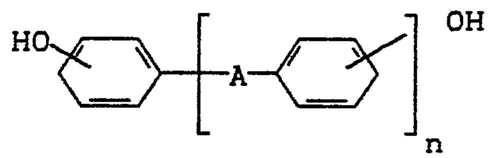

(II),

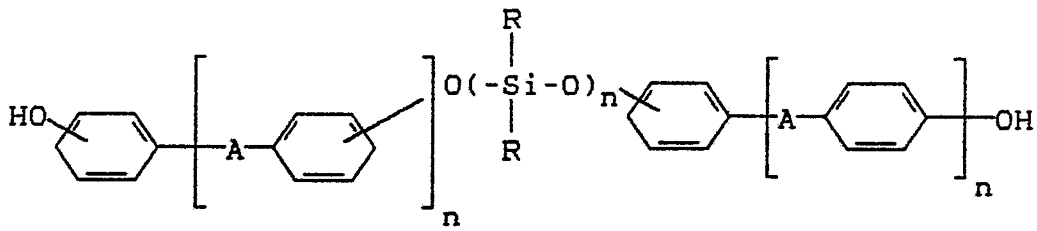

(IIa)

worin

A eine Einfachbindung, $C_1$-$C_5$-Alkylen, ein $C_2$-$C_5$-Alkyliden, ein $C_5$-$C_6$-Cycloalkyliden, -S-oder -$SO_2$-, n = 1 oder Null ist, die R's gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und m eine ganze Zahl zwischen 5 und 100, vorzugsweise zwischen 20 und 80, ist und wobei der Gewichtsanteil an Diphenolen der Formel (IIa) in den Copolycarbonaten jeweils so bemessen ist, daß der Gehalt an Diorganosiloxy-Einheiten

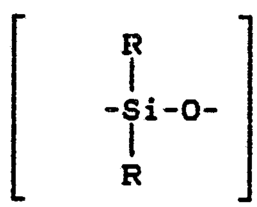

im Copolycarbonat A) zwischen 1 und 25 Gew.-%, vorzugsweise zwischen 2,5 und 25 Gew.-% beträgt.

Andere, siloxanfreie thermoplastische, halogenfreie Polycarbonate sind vorzugsweise solche, die als halogenfreie Diphenole nur solche der Formel (II) eingebaut enthalten.

In den Fällen, in denen die Komponente A) ein Gemisch aus siloxanhaltigen Polycarbonaten und siloxanfreien Polycarbonaten ist, können die siloxanhaltigen Polycarbonate auch einen Gehalt an Diorganosiloxy-Einheiten von mehr als 25 Gew.-% enthalten, sofern durch die Abmischung mit den siloxanfreien Polycarbonaten der Gehalt im Polycarbonatgemisch wiederum zwischen 1 und 25 Gew.-% liegt.

Die halogenfreien Diphenole der Formel (II) sind entweder literaturbekannt oder nach literaturbekannten Verfahren herstellbar; Polydiorganosiloxane mit Hydroxyaryloxy-Endgruppen gemäß Formel (IIa) sind ebenfalls bekannt (siehe z.B. US-Patent 3 419 634) bzw. nach literaturbekannten Verfahren herstellbar.

Die Herstellung der erfindungsgemäß geeigneten Polycarbonate gemäß Komponente A) ist literaturbekannt und kann z.B. mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten, siehe z.B. DE-OS 3 334 782 (Le A 22 594).)

Geeignete Kettenabbrecher sind z.B. Phenol oder p-tert.-Butylphenol, aber auch langkettige Alkylphenole wie 4-(1,3-Tetramethyl-butyl)phenol gemäß DE-OS 2 842 005 (Le A 19 006) oder Monoalkylphenole oder Dialkylphenole mit insgesamt 8 bis 20 C-Atomen in den Alkylsubstituenten gemäß deutscher Patentanmeldung P 35 06 472.2 (Le A 23 654), wie z.B. p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 und 10 Mol-%, bezogen auf die Summe der jeweils eingesetzten Diphenole (II) und (IIa).

Die erfindungsgemäß geeigneten Polycarbonate gemäß Komponente A) haben mittlere Gewichtsmittelmolekulargewichte ( $\bar{M}_w$, gemessen z.B. durch Ultrazentrifugation oder Streulichtmessung) von 10 000 bis 200 000, vorzugsweise von 20 000 bis 80 000.

Geeignete halogenfreie Diphenole der Formel (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan oder 1,1-Bis-(4-hydroxyphenyl)-cyclohexan.

Bevorzugte halogenfreie Diphenole der Formel (II) sind 2,2-Bis-(4-hydroxyphenyl)-propan und 1,1-Bis-(4-hydroxyphenyl)-cyclohexan.

Geeignete Diphenole der Formel (IIa) sind solche, in denen R Methyl, Ethyl, Propyl, n-Butyl, tert.-Butyl und Phenyl ist.

Bevorzugte halogenfreie Diphenole der Formel (IIa) sind die der Formel (IIb)

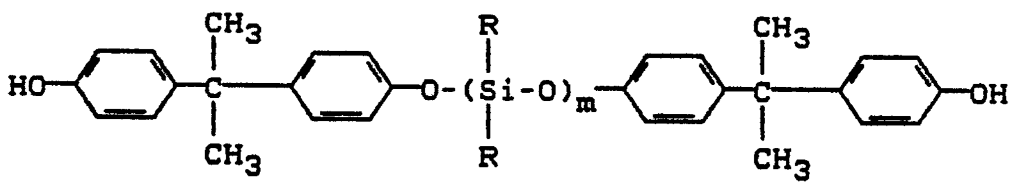

(IIb)

worin
die R's gleich sind und die vorstehend genannte Bedeutung haben, also Methyl etc. und Phenyl bedeuten und m wiederum eine ganze Zahl zwischen 5 und 100, vorzugsweise zwischen 20 und 80, ist.

Die Herstellung der Diphenole der Formel (IIa) kann z.B. aus den entsprechenden Bis-chlor-Verbindungen (III)

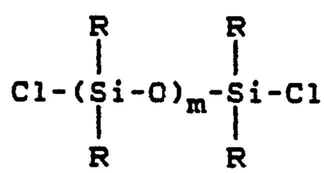

und den Diphenolen (II) z.B. gemäß US-Patent 3 419 634, Spalte 3 in Kombination mit US-Patent 3 182 662 erfolgen.

In den Bis-chlor-Verbindungen (III) haben R und m die Bedeutung wie in den Diphenolen (IIa) bzw. (IIb).

Die erfindungsgemäß geeigneten Polycarbonate gemäß Komponente A) können in bekannter Weise verzweigt sein, und zwar vorzugsweise durch den Einbau von 0,05 bis 2,0 Mol-%, bezogen auf die Summe der eingesetzten Diphenole, an drei-oder mehr als dreifunktionellen Verbindungen, z.B. solchen mit drei oder mehr als drei phenolischen OH-Gruppen.

Bevorzugte Polydiorganosiloxan-Polycarbonat-Blockcopolymere sind Copolycarbonate der halogenfreien Diphenole der Formel (II) mit Diphenolen der Formel (IIb).

Erfindungsgemäß geeignete halogenfreie, thermoplastische Copolymerisate gemäß Komponente B) sind harzartig, thermoplastisch und kautschukfrei. Besonders bevorzugte Polymerisate B) sind solche aus Styrol und/oder α-Methylstyrol mit Acrylnitril. Unter kernsubstituierten Styrolen sind kernalkylierte Styrole, wie z.B. p-Methylstyrol, zu verstehen.

Besonders bevorzugte Gewichtsverhältnisse im thermoplastischen Polymerisat B) sind 60 bis 80 Gew.-% Styrol, α-Methylstyrol, kernsubstituiertes Styrol oder Mischungen daraus und 40 bis 20 Gew.-% Acrylnitril.

Die Polymerisate gemäß Komponente B) sind bekannt und lassen sich durch radikalische Polymerisation, insbesondere durch Emulsions-, Suspensions-, Lösungs-oder Massepolymerisation, herstellen. Die Polymerisate gemäß Komponente B) besitzen vorzugsweise Molekulargewichte $\overline{M}_w$ (Gewichtsmittel, ermittelt durch Lichtstreuung oder Sedimentation) zwischen 15 000 und 200 000.

Die erfindungsgemäß geeigneten halogenfreien Phosphorverbindungen gemäß Komponente C) sind generell bekannt (siehe z.B. Ullmann, Encyclopädie der technischen Chemie, Bd. 18, S. 301 ff., 1979; Houben-Weyl, Methoden der organischen Chemie, Bd. 12/1, S. 43; Beilstein, Bd. 6, S. 177).

Erfindungsgemäß geeignete Phosphorverbindungen gemäß Komponente C), Formel (I), sind z.B. Triphenylphosphat, Trikresylphosphat, Diphenyl-2-ethylkresylphosphat, Tri(iso-propylphenyl)-phosphat, Methylphosphonsäurediphenylester oder Phenylphosphonsäurediethylester.

Die erfindungsgemäß geeigneten Tetrafluorethylenpolymerisate gemäß Komponente D) sind Polymere mit Fluorgehalten von 65 bis 76 Gew.-%, vorzugsweise 70 bis 76 Gew.-%. Beispiele sind Polytetrafluorethylen, Tetrafluorethylen-hexafluorpropylen-Copolymere oder Tetrafluorethylencopolymerisate mit geringen Mengen fluorfreier, copolymerisierbarer, ethylenisch ungesättigter Monomerer.

Diese Polymerisate sind bekannt. Sie können nach bekannten Verfahren hergestellt werden, so z.B. durch Polymerisation von Tetrafluorethylen in wäßrigem Medium mit einem freien Radikale bildenden Katalysator, z.B. Natrium-, Kalium-oder Ammoniumperoxidisulfat bei Drucken von 7 bis 71 kg/cm$^2$ und bei Temperaturen von 0 bis 200°C, vorzugsweise bei Temperaturen von 20 bis 100°C (US-Patent 2 393 967).

Die Teilchengröße der erfindungsgemäßen Tetrafluorethylenpolymerisate liegt im Bereich von 0,5 bis 20 µm und die Dichte im Bereich von 1,2 bis 1,9 g/cm$^3$.

Durch den Zusatz von Tetrafluorethylenpolymerisaten wird insbesondere das Abtropfen der Formmassenschmelze während des Brandvorganges reduziert oder ganz verhindert.

Stellt man nun die erfindungsgemäßen Formmassen z.B. durch Schmelzcompoundierung in Knetern oder Extrudern aus Granulaten oder Pulvern der Komponenten A) bis C) sowie einem Polytetrafluorethylenpulver her, das eine Teilchengröße und Dichte besitzt, die größer als der erfindungsgemäße Bereich sind, so werden zwar Formmassen hoher Flammwidrigkeit erhalten, Formkörper daraus haben aber manchmal eine mangelhafte Oberfläche, z.B. Mikrorisse oder Schlieren.

Das wird mit Sicherheit vermieden, wenn die sehr feinteiligen und zudem ungesinterten Tetrafluorethylenpolymerisate in Form einer koagulierten Mischung von Emulsionen der Tetrafluorethylenpolymerisate D. mit Emulsionen der Pfropfpolymerisate E) eingesetzt werden.

Zur Herstellung einer entsprechenden Mischung wird zuerst eine wäßrige Emulsion (Latex) eines Pfropfpolymerisates E) mit mittleren Latexteilchengrößen von 0,1 bis 2 µm, insbesondere 0,2 bis 0,6 µm, mit einer feinteiligen Emulsion eines Tetrafluorethylenpolymerisates in Wasser mit mittleren Teilchengrößen von 0,05 bis 20 µm, insbesondere von 0,08 bis 10 µm vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate E) besitzen Feststoffgehalte von 25 bis 60 Gew.-%, insbesondere von 30 bis 45 Gew.-%.

In der Emulsionsmischung liegt das Gewichtsverhältnis Pfropfpolymerisat E) zum Tetrafluorethylenpolymerisat D) zwischen 95:5 und 60:40. Anschließend wird die Emulsionsmischung in bekannter Weise koaguliert, z.B. durch Sprühtrocknung, Gefriertrocknung oder Koagulation mittels Zusatz von anorganischen oder organischen Salzen, Säuren, Basen oder organischen, mit Wasser mischbaren Lösungsmitteln, wie Alkoholen, Ketonen, vorzugsweise bie Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden z.B. von der Firma DuPont als Teflon® 30 N angeboten.

Zur Herstellung der Pfropfpolymerisate gemäß Komponente E) geeignete Kautschuke sind insbesondere Polybutadien, Butadien/Styrol-Copolymerisate mit bis zu 30 Gew.-% bezogen auf Kautschukgewicht, eines niederen Alkylesters von Acryl-oder Methacrylsäure (z.B. Methylmethacrylat, Ethylacrylat, Methylacrylat oder Ethylmethacrylat). Ein weiterer geeigneter Kautschuk ist z.B. Polyisopren. Geeignet sind weiterhin Alkylacrylatkautschuke auf der Basis von $C_1$-$C_8$-Alkylacrylaten, insbesondere Ethyl-, Butyl-, Ethylhexylacrylat.

Diese Alkylacrylatkautschuke können gegebenenfalls bis zu 30 Gew.-%, bezogen auf Kautschukgewicht, Monomere, wie Vinylacetat, Acrylnitril, Styrol, Methylmethacrylat und/oder Vinylether, copolymerisiert enthalten. Diese Alkylacrylatkautschuke können weiterhin kleinere Mengen, vorzugsweise bis zu 5 Gew.-%, bezogen auf Kautschukgewicht, vernetzend wirkende ethylenisch ungesättigte Monomere enthalten. Solche Vernetzer sind z.B. Alkylendioldi(meth)-acrylate, Polyesterdi(meth)-acrylate, Divinylbenzol, Tri-Vinylbenzol, Triallylcyanurat, Allyl(meth)-acrylat, Butadien oder Isopren. Solche Alkylacrylate sind bekannt. Acrylatkautschuke als Pfropfgrundlage können auch Produkte sein, die einen vernetzenden DienKautschuk

aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten. Andere geeignete Kautschuke sind z.B. EPDM-kautschuke, also Kautschuke aus Ethylen, Propylen und einem unkonjugierten Dienmonomer.

Bevorzugte Kautschuke zur Herstellung der Pfropfpolymerisate E) sind Dien-und Alkylacrylatkautschuke.

Die Kautschuke liegen in den Pfropfpolymerisaten E) in Form wenigstens partiell vernetzter Teilchen einer mittleren Teilchengröße von 0,1 bis 2,0 µm, insbesondere 0,2 bis 0,6 µm vor.

Die Pfropfpolymerisate E) werden durch radikalische Pfropfcopolymerisation der eingangs definierten Monomerengemische aus E.1.1 und E.1.2 in Gegenwart der zu pfropfenden Kautschuke E.2 hergestellt und sind durchweg bekannt. Bevorzugte Herstellungsverfahren für die Pfropfpolymerisate E) sind Emulsions-, Lösungs-, Masse-oder Suspensionspolymerisation. Besonders bevorzugte Pfropfpolymerisate E) sind die sogenannten ABS-Polymerisate. Als kernsubstituiertes Styrol sei p-Methylstyrol erwähnt.

Da der Einsatz der erfindungsgemäß zu verwendenden Pfropfpolymerisate E) durch Vorabmischung ihrer Emulsionen mit Emulsionen der Komponente D) erfolgt, ist die Herstellung der Komponente E) nach dem Verfahren der Emulsionspolymerisation am zweckmäßigsten.

Die erfindungsgemäßen thermoplastischen Formmassen können weitere, für Polycarbonate oder für die thermoplastischen Polymerisate bekannte Zusätze, wie Stabilisatoren, Pigmente, Fließmittel, Entformungsmittel und/oder Antistatika enthalten.

Die erfindungsgemäßen Formmassen, bestehend aus den Komponenten A), B), C), D) und E) und gegebenenfalls weiteren bekannten Zusätzen, wie Stabilisatoren, Pigmenten, Fließmitteln, Entformungsmitteln und/oder Antistatika, werden hergestellt, indem man die jeweiligen Bestandteile in bekannter Weise vermischt und danach bei Temperaturen von 200 bis 330°C in üblichen Aggregaten, wie Innenknetern oder Ein-oder Zweischneckenextrudern, schmelzcompoundiert oder schmelzextrudiert, oder indem man die Lösungen der jeweiligen Komponenten in geeigneten organischen Lösungsmitteln, z.B. in Chlorbenzol, mischt und die Lösungsgemische in gebräuchlichen Eindampfaggregaten, z.B. in Eindampfextrudern, eindampft.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind Gehäuseteile jeder Art (z.B. für Haushaltsgeräte, wie Kaffeemaschinen oder Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften besitzen.

Eine weitere Form der Verarbeitung ist die Herstellung von Formkörpern durch Tiefziehen oder Warmverformung zuvor durch Extrusion hergestellter Platten oder Folien.

Teilchengröße bedeutet immer mittlerer Teilchendurchmesser $d_{50}$, ermittelt durch Ultrazentrifugenmessungen nach W. Scholtan et al, Kolloid-Z, u. Z. Polymere 250 (1972) 782 bis 796.

## Beispiele

Eingesetzte Legierungskomponenten

A.1 Ein Copolycarbonat auf Basis von Bisphenol A und 5 Gew.-% Polydimethylsiloxan der Blocklänge ($\overline{P}_n$) 40 mit einer relativen Lösungsviskosität von 1,31, gemessen in $CH_2Cl_2$ bei 25°C, und einer Konzentration von 0,5 Gew.-%, hergestellt unter Verwendung von Phenol als Kettenabbrecher, gemäß DE-OS 3 334 782.

A.2 Homopolycarbonat auf Basis von Bisphenol A mit einer relativen Lösungsviskosität von 1,32, gemessen in $CH_2Cl_2$ bei 25°C, und einer Konzentration von 0,5 Gew.-%, hergestellt unter Verwendung von Phenol als Kettenabbrecher.

B. Styrol/Acrylnitril-Copolymerisat mit einem Styrol-Acrylnitril-Verhältnis von 72:28 und einer Grenzviskosität von $(\eta)$ = 0,55 dl/g (Messung in Dimethylformamid bei 20°C).

C. Triphenylphosphat

D.1 Tetrafluorethylenpolymerisat als koagulierte Mischung aus einem SAN-Pfropfpolymerisat und einer Tetrafluorethylenpolymerisat-Emulsion in Wasser; Gehalt an Tetrafluorethylenpolymerisat in der Mischung: 10 Gew.-%, bezogen auf Mischung PTFE-SAN-Pfropfpolymerisat. Die Tetrafluorethylenpolymerisat-Emulsion besitzt einen Feststoffgehalt von 60%; die Teilchengröße liegt zwischen 0,05 und 0,5 µm. Die SAN-Pfropfpolymerisat-Emulsion besitzt einen Feststoffgehalt von 34 Gew.-% und hat eine Latexteilchengröße von 0,3 bis 0,4 µm.

Herstellung von D.1:

Die Emulsion des Tetrafluorethylenpolymerisats wird mit der Emulsion des SAN-Pfropfpolymerisat E vermischt und mit 1,8 Gew.-%, bezogen auf Polymerfeststoff, phenolischer Antioxidantien stabilisiert. Bei 86 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

D.2 Tetrafluorethylenpolymerisat in Pulverform mit einer Teilchengröße von 500 bis 650 µm und einer Dichte von 2,18 bis 2,20 g/cm³ der Firma Hoechst (Hostaflon TF 2026).

E. SAN-Pfropfpolymerisat von 50 Gew.-% Styrol-Acrylnitril-Gemisch (im Gewichtsverhältnis von 72:28) auf 50 Gew.-% teilchenförmiges Polybutadien mit einer mittleren Teilchengröße ($d_{50}$) von 0,3 bis 0,4 µm, erhalten durch Emulsionspolymerisation.

<u>Herstellung der erfindungsgemäßen Formmassen</u>

Die Compoundierung der Komponenten A), B), C), D) und E) erfolgte auf einem 3-l-Innenkneter bei Temperaturen zwischen 200 und 220°C.

Die Herstellung von Formkörpern erfolgte auf einer Spritzgußmaschine bei 260°C.

Das Brandverhalten der Proben wurde nach UL-Subj. 94 V in Prüfkörperdicken von 3,2 mm bzw. 1,6 mm gemessen. Der UL-94-Test wird wie folgt durchgeführt:

Substanzproben werden zu Stäben der Abmessungen 127 × 12,7 × 3,2 mm bzw. 127 × 12,7 × 1,6 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe be wertet. Zum Entzünden der Probe wird ein Bunsenbrenner mit einer 10 mm (3,8 inch) hohen blauen Flamme von Erdgas mit einer Wärmeeinheit von 3,73 × $10^4$ kJ/m³ (1000 BTU per cubic foot) benutzt.

Die UL-94 V-O-Klassifizierung umfaßt die nachstehend beschriebenen Eigenschaften von Materialien, die gemäß der UL-94-Vorschrift geprüft wurden. Die Polycarbonatformmassen in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probensatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL-94-Klassifizierungen bezeichnen Proben, die weniger flammwidrig und selbstverlöschend sind und die flammende Tropfen oder Teilchen abgeben. Diese Klassifizierungen werden mit UL-94 V-1 und V-2 bezeichnet. N. b. heißt "nicht bestanden" und ist die Klassifizierung von Proben, die eine Nachbrennzeit von ≥30 s aufweisen.

Die Bestimmung der Kerbschlagzähigkeit erfolgte in Anlehnung an DIN 53 453/ISO R 179 an Stäben der Abmessung 50 × 6 × 4 mm, wobei die Stäbe mit einer V-förmigen Kerbe der Kerbtiefe 2,7 mm versehen wurden sowie nach Izod an Stäben der Abmessung 2,5 × 1/2 × 1/8" gemäß ASTM-D-256.

Aus der folgenden Tabelle können die genauen Zusammensetzungen der geprüften Formmassen sowie die erhaltenen Prüfdaten entnommen werden.

Es zeigt sich, daß bei Verwendung von Polydiorganosiloxan-Polycarbonat-Blockcopolymeren als PC-Komponente sowie bei Verwendung des feinteiligen Polytetrafluorethylens (eingesetzt als koagulierte Mischung einer PTFE-und einer Pfropfpolymerisatemulsion) bei nach wie vor ausgezeichneter Flammwidrigkeit Produkte mit wesentlich verbesserter Kerbschlagzähigkeit resultieren.

Tabelle

| A 1 | A 2 | B | C | D 1 | D 2 | UL-94 V 3,2 mm | UL-94 V 1,6 mm | Kerbschlagzähigkeit (kJ/m²) | Kerbschlagzähigkeit (J/m) |
|---|---|---|---|---|---|---|---|---|---|
| (Gew.-Teile) | | | | | | | | | |
| **Vergleichsbeispiele** | | | | | | | | | |
| | 80 | 20 | 10 | 3 | | VO | VO | 12,8 | 99 |
| | 70 | 30 | 10 | 3 | | VI | - | 8,7 | 106 |
| 80 | | 20 | 10 | | 0,3 | VO | VO | 8,6 | 234 |
| **Erfindungsgemäße Beispiele** | | | | | | | | | |
| 80 | | 20 | 10 | 3 | | VO | VI | 23,1 | 513 |
| 70 | | 30 | 10 | 3 | | VO | VI | 20,5 | 406 |

**Ansprüche**

1. Thermoplastische Formmassen, enthaltend

A) 60 bis 90 Gew.-Teilen eines halogenfreien Polydiorganosiloxan-Polycarbonat-Blockcopolymeren, mit mittlerem Molekulargewicht $\overline{M}_w$ von 10 000 bis 200 000 und mit einem Gehalt an aromatischen Carbonatstruktureinheiten zwischen 75 und 99 Gew.-% und einem Gehalt an Diorganosiloxan-Einheiten zwischen 25 und 1,0 Gew.-%, wobei die Blockcopolymeren, ausgehend von α,ω-Bishydroxyaryloxyendgruppenhaltigen Polydiorganosiloxanen, mit einem Polymerisationsgrad $\overline{P}_n$ von 5 bis 100, hergestellt werden,

B) 10 bis 40 Gewichtsteile eines halogenfreien, thermoplastischen Copolymerisats aus 50 bis 95 Gew.-% Styrol, α-Methylstyrol, kernsubstituiertem Styrol oder Mischungen daraus und 5 bis 50 Gew.-% (Meth)-Acrylnitril

C) 1 bis 20 Gewichtsteile, bezogen auf 100 Gewichtsteile Gesamtgewicht aus A) und B), einer halogenfreien Phosphorverbindung der Formel (I);

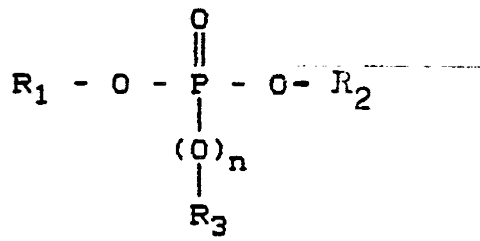

(I)

worin

$R_1$, $R_2$ und $R_3$ unabhängig voneinander $C_1$-$C_8$-Alkyl oder gegebenenfalls alkylsubstituiertes $C_6$-$C_{20}$-Aryl sind und

"n" für 0 oder 1 steht und

D) 0,05 bis 5 Gewichtsteile, bezogen auf 100 Gewichtsteile Gesamtgewicht aus A) und B), eines Tetrafluorethylenpolymerisats mit mittleren Teilchengrößen von 0,05 bis 20 µm und einer Dichte von 1,2 bis 1,9 g/cm³, wobei die Komponente D. in Form einer koagulierten Mischung von Emulsionen der Tetrafluorethylenpolymerisate D mit Emulsionen von max. 3 Gewichtsteilen, mindestens jedoch 0,1 Gewichtsteil, bezogen auf 100 Gewichtsteile der Summe der Komponenten A) und B), von Pfropfpolymerisaten

E) aus 5 bis 90 Gewichtsteilen einer Mischung aus

E.1.1 50 bis 95 Gew-% Styrol, α-Methylstyrol, kernsubstituiertem Styrol, Methylmethacrylat oder Mischungen daraus und

E.1.2 50 bis 5 Gew.-% (Meth)-Acrylnitril, Methylmethacrylat, Maleinsäureanhydrid, N-substituiertem Maleinimid oder Mischungen daraus, auf

E.2 95 bis 10 Gewichtsteile eines Kautschuks mit einer Glastemperatur $T_G \leq 10\,°C$,

eingesetzt wird, und wobei das Gewichtsverhältnis Pfropfpolymerisat E. zum Tetrafluorethylenpolymerisat D zwischen 95 : 5 und 60 : 40 liegt.

2. Formmassen gemäß Anspruch 1, dadurch gekennzeichnet, daß die Komponente A) eine Mischung von halogenfreien Polydiorganosiloxan-Polycarbonat-Blockcopolymeren mit anderen, siloxanfreien thermoplastischen, halogenfreien Polycarbonaten ist, wobei der Gesamtgehalt an Diorganosiloxy-Einheiten in dieser Polycarbonatmischung wiederum zwischen 1 und 25 Gew.-% liegt.

3. Formmassen gemäß Ansprüchen 1 und 2, dadurch gekennzeichnet, daß die Komponente C) in Mengen von 2 bis 15 Gewichtsteilen vorliegt.

4. Formmassen gemäß Ansprüchen 1 bis 3, dadurch gekennzeichnet, daß die Komponente D) in Mengen von 0,1 bis 1,0 Gewichtsteilen vorliegt.

5. Formmassen gemäß Ansprüchen 1 bis 4, dadurch gekennzeichnet, daß die Pfropfpolymerisate E aus 30 bis 80 Gewichtsteilen einer Mischung aus E.1.1. und E.1.2. auf 70 bis 20 Gewichtsteilen eines Kautschuks E.2. hergestellt sind.

6. Formmassen gemäß Ansprüchen 1 bis 5, bestehend aus den Komponenten A., B., C., D. und E. und zusätzlich mindestens einem Zusatz, ausgewählt aus der Gruppe der Stabilisatoren, Pigmente, Fließmittel, Entformungsmittel und Antistatika.

7. Verfahren zur Herstellung der Formmassen gemäß Ansprüchen 1 bis 5, dadurch gekennzeichnet, daß man die Komponenten A - E in bekannter Weise vermischt und danach bei Temperaturen von 200 - 330 °C in gebräuchlichen Aggregaten schmelzcompoundiert oder schmelzextrudiert.

8. Verfahren zur Herstellung der Formmassen gemäß Ansprüchen 1 bis 5, dadurch gekennzeichnet, daß man Lösungen der Komponenten A - E in geeigneten organischen Lösungsmitteln mischt und danach die Lösungsgemische in gebräuchlichen Eindampfaggregaten eindampft.

9. Verfahren zur Herstellung der Formmassen des Anspruchs 6 gemäß den Ansprüchen 7 und 8, dadurch gekennzeichnet, daß man mindestens einen Zusatz, ausgewählt aus der Gruppe der Stabilisatoren, Pigmente, Fließmittel, Entformungsmittel und Antistatika, einbezieht,